# EUROPEAN PATENT APPLICATION

(11) **EP 1 722 094 A2**
(43) Date of publication of application: **15.11.2006**
(21) Application number: 06118747.2
(22) Date of filing: 01.09.2003
(51) Int. Cl.: F02M 35/10

(54) **Air intake module for engines**

(30) Priority: 02.09.2002 JP 2002256406; 04.09.2002 JP 2002258662; 13.09.2002 JP 2002268067
(62) Divisional of application: 03019842.8
(71) Applicant: DENSO CORPORATION, Kariya-city, Aichi-pref., 448-8661 (JP)
(72) Inventor: Kameda, Yasutoshi, Kariya-city Aichi 448-8661 (JP); Ino, Masao, Kariya-city Aichi 448-8661 (JP)
(74) Representative: TBK-Patent

(57) **Abstract**

An air intake module (1) for an internal combustion engine, comprising:
a head cover (60) mounted on a cylinder head of an internal combustion engine and an air intake manifold (40) having an air connector (41) and air intake pipes (50), the air intake pipes being branched from the air connector and including rectilinear, straight port portions (51) formed on a side of the head cover opposite to the cylinder head and curved port portions (52) which connect ends of the straight port portions on the side opposite to an air connector or an air intake duct (21) defining an air intake passage for the flow of intake air which has passed through an air cleaner (10), a resonator volume portion (710) which forms a resonator for, together with the air intake duct, diminishing an air intake noise in the air intake passage, the duct case covering the outside of the air intake duct.

## Description

The present invention relates to an air intake module for internal combustion engines.

In an air intake system for an engine disclosed in JP-A No. 334070/1996, an air cleaner and an intake manifold are built integrally. Integrally mounting the air cleaner and the intake manifold to the air intake system enhances not only the manufacture of the air intake system and the mounting of the air intake system to the engine, but also enables the size of the entire system to be reduced.

In a vehicle in which an engine drive shaft is perpendicularly disposed to a vehicular travelling direction as in a front-wheel-drive vehicle in the case of a front-side intake of air, the air intake system is disposed on a front side in the vehicular travelling direction with respect to the engine.

If an air intake system is disposed near the engine, because the vicinity of the engine becomes high in temperature, the temperature of intake air introduced into the engine rises. As a result, the air charging efficiency for a combustion chamber becomes lower, which leads to lowering of the engine performance. More specifically, in case of decreasing the volume of an engine compartment relative to the whole of the vehicle, it is necessary to dispose the engine and peripheral devices efficiently within the engine compartment. To meet this requirement, the engine and the air intake system are disposed close to each other, with the result that the temperature of the air intake system is apt to rise due to heat from the engine.

Moreover, it is necessary that the engine and peripheral devices accommodated within the engine compartment be fixed to the chassis of the vehicle for example. Consequently, it becomes necessary to provide a fixing member for each peripheral device. As a result, the number of parts increases and the mounting of peripheral devices becomes complicated. Further, for example in the case of a front-side intake of air, a fuel supply device is disposed ahead of the engine. Thus, in the event of vehicular collision on the vehicular front side, the fuel supply device may be damaged.

In addition, it is proposed to integrate a head cover and an air intake manifold with resin. When the intake manifold is disposed near a cylinder head, the intake manifold is liable to receive heat of the engine through the head cover. Since the intake air flowing into the engine is heated and the charging efficiency is lowered. Further, in installing ignition coils which project to the cylinder head side from the head cover, it is necessary to install the ignition coils through a small gap between the head cover and the air intake manifold. This causes lowering of integrated ignition coil assembling performance, increased number of assembling steps, and complicated assembling work.

Alternatively, if the air intake manifold is disposed on the head cover, the gap between the air intake manifold and the vehicular hood becomes small, thus lowering the function of absorbing a collision shock by deformation of the bonnet, for example, in the event of collision of the vehicle with a pedestrian. Furthermore, in the case of the head cover formed of resin, the noise insulating property is lowered than the head cover formed of metal. In detail, operation noises such as of cams and valves accommodated within the cylinder head and combustion noise in the combustion chambers are apt to leak. This might cause an increase of engine noise.

Further, in many air intake systems, an electronic unit (ECU) having a microcomputer is employed for controlling an engine. The ECU generates heat when it carries out calculations for controlling the engine. When the ECU is installed near the engine, it is exposed to heat generated from the engine. To cope with this, the ECU is accommodated within a special receptacle portion. The receptacle portion permits to protect the ECU against the heat from the engine, and also to cool the ECU by introducing outside air into the receptacle portion itself. However, the receptacle portion must be provided additionally and separately, and causes the number of components of the air intake module to increase and suffers from its complicated mounting operation.

It is an object of the present invention to provide an air intake module capable of decreasing the quantity of heat transmitted from an engine to air intake pipes and thereby improving the engine performance, and/or having high assembling performance and high noise insulating property as well as of effectively protecting pedestrians.

For attaining the object, an air intake module is constructed such that straight port portions which constitute air intake pipes of an air intake manifold are formed on a side of a head cover opposite to a cylinder head. Thus, the head cover is interposed between the air intake pipes and the cylinder head to decrease of quantity of heat transmitted from the engine to the air intake manifold side. Forming the air intake manifold in a rectilinear shape allows the pressure loss of air intake air to be diminished and also allows a rise in temperature of air intake air flowing through the air intake pipes to be decreased. This enables the charging efficiency of air intake air to improve and also enables the engine performance to improve. In addition, ignition coils are each disposed between adjacent straight port portions. Therefore, the ignition coils are mounted through both air intake manifold and head cover from a side of the air intake manifold opposite to the head cover, thus improving the ignition coil assembling performance. Further the cylinder head is provided with not only the head cover but also the air intake manifold on a side of the head cover opposite to the cylinder head. This construction enables noises generated from, for example, cams in the cylinder head to be shut off by both head cover and air intake manifold, thus improving the noise insulating property.

It is an object of the present invention to provide an air intake module capable of reducing the number of parts to thereby facilitate the mounting of the air intake module.

For attaining this object, an air intake module is provided with a duct case which covers an air intake duct, an electronic control unit is accommodated within a control unit receptacle portion which is formed in the duct case, and the duct case has not only the control unit receptacle portion but also a resonator volume portion which forms a resonator conjointly with the air intake duct. The control unit receptacle portion and the resonator volume portion are integrally formed by the duct case, whereby it is possible to reduce the number of parts and facilitate the mounting of the air intake module. Moreover, the air intake duct is covered with the duct case, so that noise of intake air flowing through an air intake passage defined by the air intake duct is shut off by both air intake duct and duct case. Consequently, it is possible to diminish a transmitted noise through the air intake duct.

The above and other objects, features and advantages of the present invention will become more apparent from the following detailed description made with reference to the accompanying drawings. In the drawings:
Fig. 1 is a perspective view of an air intake module including an air cleaner, a throttle device, an intake manifold, a head cover, ignition coils, and a fuel supply devices according to the first embodiment of the present invention;
Fig. 2 is a top plan view showing the air intake module according to the first embodiment;
Fig. 3 is a top plan view of an air intake module according to the second embodiment of the present invention;
Fig. 4 is a sectional view taken on line IV-IV in Fig. 3, showing an air intake manifold, a head cover, and an ignition coil in the second embodiment;
Fig. 5 is a side view showing the air intake manifold, the head cover, and the ignition coil in the second embodiment;
Fig. 6 is a sectional view taken on line VI-VI in Fig. 3, showing the air intake manifold, the head cover, and the ignition coil in the second embodiment;
Fig. 7 is a top plan view of the air intake module, showing the flow of outside air for cooling in the second embodiment;
Fig. 8 is an exploded perspective view showing a duct case and an air intake duct, as well as the vicinity thereof, in an air intake module according to the third embodiment of the present invention;
Fig. 9 is a top plan view of the air intake module according to the third embodiment; and
Fig. 10 is a top plan view of the air intake module showing the flow of outside air for cooling in the third embodiment.

### (First Embodiment)

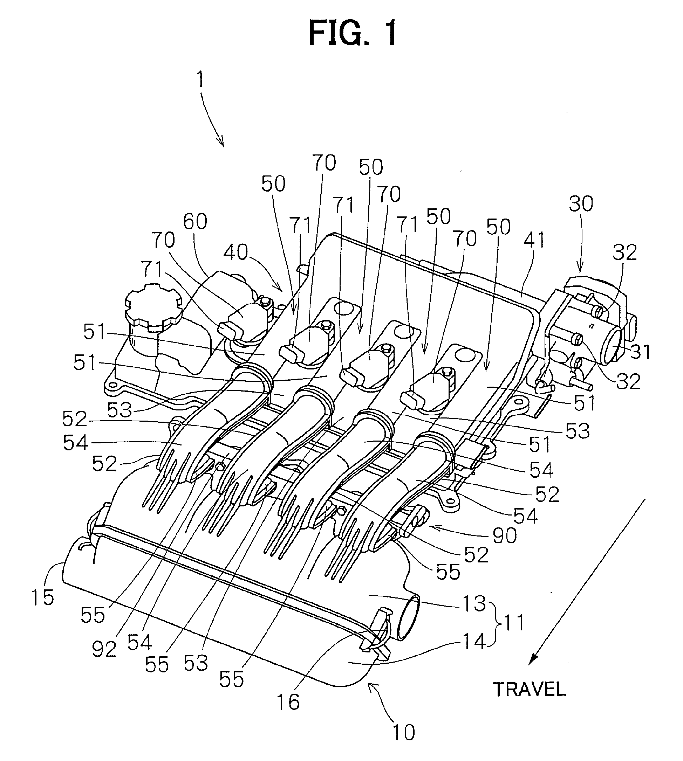

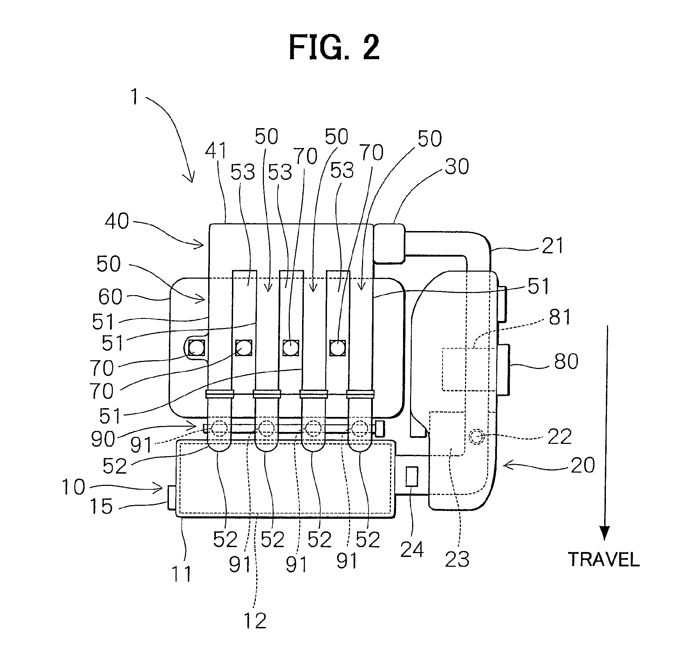

An air intake module according to the first embodiment is illustrated in Figs. 1 and 2. The air intake module 1 is provided with an air cleaner 10, a duct case 20, a throttle device 30, an intake manifold 40, a head cover 60, ignition coils 70, an ECU 80, and a fuel supply device 90. The air intake module 1 is mounted on a cylinder head of an engine (not shown). Mounting the head cover 60 to the cylinder head allows the air intake module 1 to be mounted on the engine.

In this embodiment, the engine with the air intake module 1 thus mounted thereon is mounted on a front-wheel-drive vehicle. Therefore, a drive shaft of the engine (not shown) is disposed perpendicularly relative to the vehicular travelling direction which is indicated with arrow in Figs. 1 and 2. The air intake module 1 is accommodated within the engine compartment of the vehicle together with the engine (not shown) in such a manner that the air cleaner 10 is positioned on the front side in the vehicular travelling direction. Within the engine compartment, the air cleaner 10, the intake manifold 40 and the fuel supply device 90 as components of the air intake module 1, as well as the engine, are positioned in this order from the front side in the vehicular travelling direction. The fuel supply device 90 is disposed below the air cleaner 10 and the intake manifold 40 and above the engine. That is, the air cleaner 10 and the intake manifold 40 are disposed at the side opposite the engine with respect to the fuel supply device 90.

The air cleaner 10 has an air cleaner case 11 formed of resin. The air cleaner case 11 is formed as a hollow case and, as shown in Fig. 2, an air cleaner element 12 is received in the interior of the air cleaner case 11. As shown in Fig. 1, the air cleaner case 11 is composed of an upper case 13 and a lower case 14, both cases 13 and 14 being bonded together using a clamp 16 or the like. An intake port 15 for the intake of air is formed in one end of the air cleaner 10. Intake air which has been sucked in through the intake port 15 passes through the air cleaner element 12 accommodated in the interior of the air cleaner case 11, whereby foreign matters contained in the intake air are removed. An intake duct 21 is connected to an opposite end of the air cleaner 10, as shown in Fig. 2.

The intake duct 21, which forms a cylindrical intake passage, is connected at one end thereof to the air cleaner 10 and at an opposite end thereof to the throttle device 30. Part of the intake duct 21 is covered with the duct case 20. The duct case 20, which is formed of resin, constitutes a resonator 23 conjointly with an aperture 22 formed in the intake duct 21. An air flow meter 24 is attached to the intake duct 21 at a position between the air cleaner 10 and the duct case 20. For example, the air flow meter 24 has a thermal flow meter to detect the flow rate of intake air flowing through the intake passage defined by the intake duct 21.

The throttle device 30 is installed between the intake duct 21 and an air connector 41. The throttle device 30 has a throttle valve (not shown) adapted to change a sectional area of an intake passage 31 which is formed in the interior of the throttle device 30. The throttle valve is actuated by means of an actuator (not shown). The throttle device 30 is fixed to an air connector 41 through a screw 32 for example. As the throttle valve of the throttle device 30 changes the sectional area of the intake passage 31, the flow rate of intake air flowing through the intake passage 31 is controlled. The intake air whose flow rate has thus been controlled by the throttle device 30 then flows into the air connector 41. The air connector 41 is formed of resin integrally with the intake manifold 40.

The intake manifold 40 has intake pipes 50 which provide communication between the air connector 41 and combustion chambers (not shown) in the engine. More specifically, intake pipes 50 of a number corresponding to the number of engine combustion chambers are branched from the air connector 41. The intake pipes 50 are each provided with a straight port portion 51 and a curved port portion 52. The straight port portions 51 extend rectilinearly from the air connector 41 toward the air cleaner 10, while the curved port portions 52 are connected to ends of the straight port portions 51 on the air cleaner 10 side and are turned down toward the air connector 41. The straight port portions 51 of the intake manifold 40 are installed on a side of the head cover 60 opposite to the cylinder head.

Plate-like blade portions 53 are formed so as to be each positioned between adjacent straight port portions 51 of the intake pipes 50 to provide connection between the adjacent straight port portions.

The head cover 60 is formed of resin and is mounted on the cylinder head of the engine (not shown). The straight port portions 51 in the intake manifold 40 are fixed to the head cover 60 by fusion-bonding for example.

The ignition coils 70 are respectively provided with coils for the supply of a high voltage to spark plugs (not shown). The ignition coils 70 are installed through the blade portions 53 in the intake manifold 40 and also through the head cover 60. Between adjacent ignition coils 70 is positioned the straight port portion 51 of the associated intake pipe 50 branched from the air connector 41. As shown in Fig. 1, terminals 71 of the ignition coils 70 project to the side opposite to the head cover from the blade portions 53 in the intake manifold 40. Spark plug mounting side (not shown) of each ignition coil 70 projects from the head cover 60 to the engine side.

The ECU 80 shown in Fig. 2 has a microcomputer for electronically controlling various portions of the engine. The air flow meter 24 and various sensors, e.g., revolution sensor, accelerator position sensor, and water temperature sensor, (not shown), are connected to the ECU 80 and signals provided from these sensors are inputted to the ECU 80. Further, the ECU 80 is connected to the throttle device 30 or injectors 91 in the fuel supply device 90. In accordance with signals inputted from various sensors the ECU 80 controls various portions of the engine such as the throttle device 30 and the injectors 91. The ECU 80 has a circuit board 81, on which are installed plural semiconductor devices, including CPU and ROM. The ECU 80 is received in an ECU receptacle portion formed at the bottom of the duct case 20.

The fuel supply device 90 has the injectors 91 and a fuel rail 92. The fuel rail 92 is a cylindrical member formed of resin or metal and is installed on an inner periphery side in the curving direction of the curved port portions 52 in the intake manifold 40. At the fuel rail 92 branch portions (not shown) are formed, and the injectors 91 are attached to the branch portions respectively. The fuel rail 92 is in communication with a fuel supply source such as a fuel pump (not shown) and supplies fuel fed from a fuel tank by the fuel supply device to the injectors 91. The injectors 91 inject the fuel thus supplied from the fuel rail 92 into the intake pipes 50. The injectors 91 are installed so that their ends located on the side opposite to the branch portions project into the intake pipes 50.

The straight port portions 51 and the curved port portions 52, which constitute the intake manifold 40, are formed of resin and are bonded to each other by fusion-bonding for example. As shown in Fig. 1, the curved port portions 52 in the intake manifold 40 are each formed by fusion-bonding an outer member 54 located on an outer periphery side in the curving direction and an inner member 55 located on an inner periphery side to each other. The outer members 54 of the curved port portions 52 and the upper case 13 of the air cleaner case 11 are integrally formed of resin. Forming the outer member 54 and the upper case 13 integrally with each other allows the intake manifold 40 and the air cleaner case 11 to be rendered integral with each other by the resin, and also allows the curved port portions 52 of the intake pipes 50 to be disposed in proximity to the air cleaner 10.

Since the air cleaner 10 is integral with the curved port portions 52 which are positioned away from the engine through the straight port portions 51, it is less affected by the heat generated from the engine. In the interior of the air cleaner 10, intake air which has been sucked in from the intake port 15 flows to the intake duct 21. Since the intake port 15 is positioned ahead of the engine in the vehicular travelling direction, the intake air is less affected by the heat from the engine. For this reason, the temperature of the intake air flowing through the air cleaner 10 is lower than that of the intake air present in the interior of the engine compartment. As a result, the intake air flowing through the intake manifold 40 is cooled, when passing through the curved port portions 52, by the intake air flowing through the air cleaner 10. Cooling the intake air flowing through the intake manifold 40 improves the charging efficiency of intake air fed from the intake manifold 40 to the engine combustion chambers.

In the air intake module 1, since the intake manifold 40 and the air cleaner 10 are formed integrally with each other, the intake air flowing through the intake manifold 40 is cooled by the intake air flowing through the air cleaner 10. Consequently, the charging efficiency of intake air fed into the engine combustion chambers is improved and hence it is possible to improve the engine output.

Moreover, the air cleaner 10 in the air intake module 1 is disposed on the front side in the travelling direction of the vehicle on which the air intake module 1 is mounted. The curved port portions 52 in the intake manifold 40 are disposed on the engine side of the air cleaner 10 and the fuel rail 92 is disposed on the inner periphery side of the curved port portions 52. As a result, the fuel rail 92 is enclosed with the air cleaner case 11 and the curved port portions 52 in the intake manifold 40. Accordingly, when a force is applied to the engine from the front side in the vehicular travelling direction, the air cleaner case 11 is the first to be damaged and absorbs impact. Then, the curved port portions 52 in the intake manifold 40 absorbs a further impact. Thus, the fuel rail 92 disposed on the inner periphery side of the curved port portions 52 is protected by the air cleaner case 11 and the intake manifold 40 and is prevented from being damaged.

Further, since the air cleaner 10 is supported by the intake manifold 40, it is not necessary to use any special member for fixing the air cleaner 10 to the vehicular chassis for example, whereby it is possible to decrease the number of parts. Additionally, since the air cleaner 10 and the intake manifold 40 are integrated to form the air intake module 1, the mounting of the module 1 to the engine can be done easily.

Although the air cleaner case 11 is mounted on the front side in the vehicular travelling direction, its mounting position is not limited to the vehicular front side, but may be on the rear side or sideways in the vehicular travelling direction. Even in this case it is possible to attain the cooling of intake air.

### (Second Embodiment)

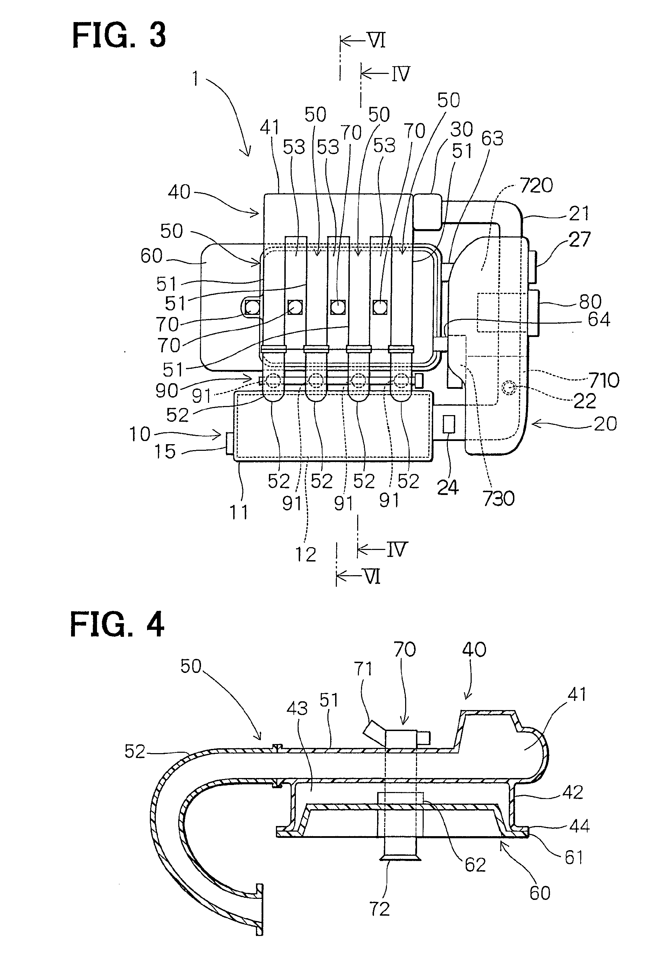

An air intake module according to the second embodiment is illustrated in Figs. 3 to 8.

The duct case 20 is formed of resin and has vertically divided case body 210 and a case cover 220. Further, as shown in Figs. 3 and 4, duct case 20 has a duct cooling portion 720, an outside air discharge portion 730, and a resonator volume portion 710. Outside air is introduced into the duct cooling portion 720 from an outside air inlet 27. As a result, the air intake duct 21 accommodated within the duct cooling portion 720 is cooled by the outside air. The outside air discharge portion 730 is in communication with a space between a radiator and a radiator fan (neither shown). The resonator volume portion 710 forms a resonator conjointly with an aperture 22 formed in the air intake duct 21 to diminish the noise of air intake air flowing through the air intake duct 21.

As shown in Fig. 4, the air intake manifold 40 is formed with a skirt portion 42 extending toward the head cover 60. The skirt portion 42 is formed on an outer periphery edge of the air intake manifold 40 which covers the head cover 60. This allows a box-shaped space 43 to be formed on the head cover 60 side of the air intake manifold 40. The box-shaped space 43 is open on the head cover 60 side. The skirt portion 42 has an outwardly projecting flange 44.

Part of the head cover 60 is received within the box-shaped space 43 formed on the head cover 60 side of the air intake manifold 40. A flange 61 is formed on an outer periphery edge of the head cover 60 at a position corresponding to the flange 44 formed on the skirt portion 42 of the air intake manifold 40. The air intake manifold 40 is applied from above the head cover 60 and the flange 61 of the head cover 60 and the flange 44 of the air intake manifold 40 are superimposed one on the other. Thereafter, the flanges 61 and 44 are bonded together, for example, by fusion-bonding under vibration, whereby the air intake manifold 40 and the head cover 60 are united.

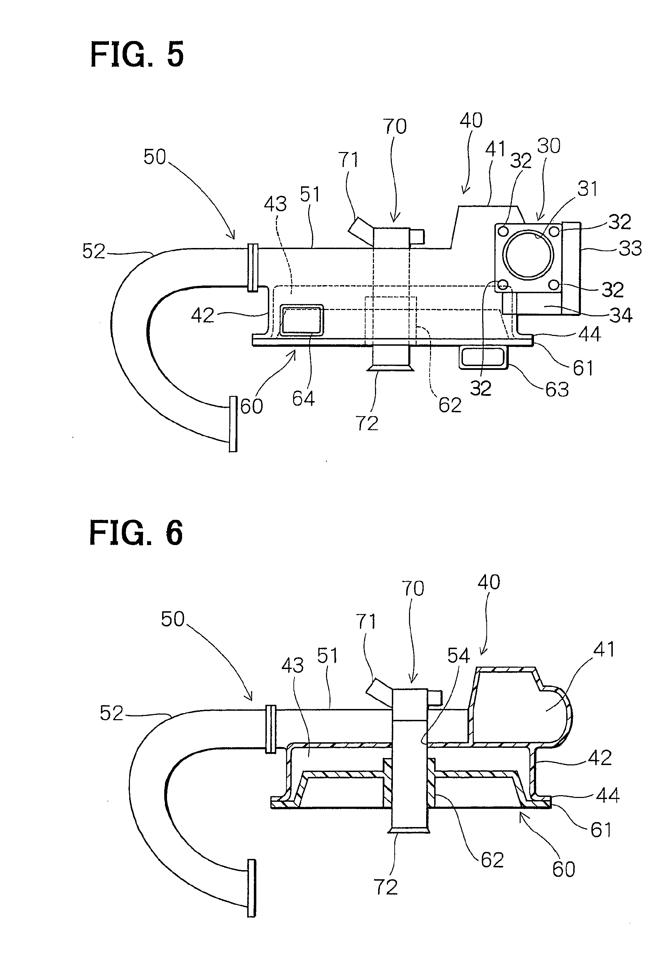

As shown in Figs. 3 and 6, the head cover 60 has an inserting portion 62 for insertion therein of the ignition coils 70. The inserting portion 62 not only makes positioning of the ignition coils 70 but also supports the ignition coils 70. After the air intake manifold 40 and the head cover 60 are bonded together, the ignition coils 70 are inserted into holes 54 formed in the blade portions 53 of the air intake manifold 40 and also into the inserting portion 62 formed in the head cover 60. The ignition coil 70 has a fixing portion 72 which protrudes from the head cover 60 toward the cylinder head at a position opposite to the connector portion 71.

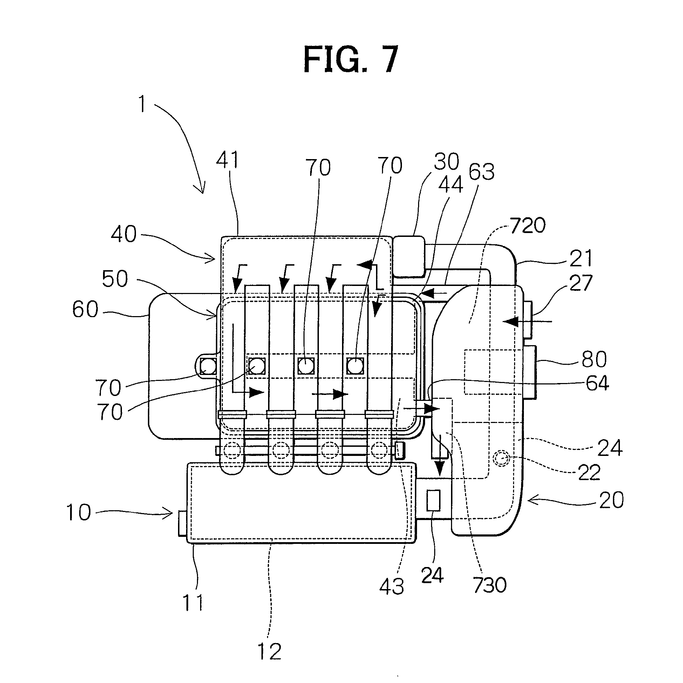

As shown in Fig. 7, the box-shaped space 43 in the air intake manifold 40 is partitioned by the inserting portion 62 with the ignition coils 70 inserted therein and is formed in U-shape between the head cover 60 and the air intake manifold 40 as well as the air connector 41. As shown in Figs. 3 and 7, the space 43 is in communication on one end side thereof with a cooling air inlet 63 and is in communication on an opposite end side thereof with a cooling air outlet 64. As shown in Fig. 5, the cooling air inlet 63 and outlet 64 are integral with the head cover 60. As shown in Fig. 3, the cooling air inlet 63 is in communication with the duct cooling portion 720 of the duct case 20, while the cooling air outlet 64 is in communication with the outside air discharge portion 730 of the duct case 20. The outside air discharge portion 730 is in communication with the space between the radiator and the radiator fan for cooling the radiator (neither shown). With operation of the radiator fan, the pressure of the space between the radiator and the radiator fan becomes lower than the ambient pressure, whereby a pressure difference is created between the outside air inlet 27 and the outside air discharge portion 730 in the duct case 20. As a result, the outside air for cooling which has been introduced into the duct cooling portion 720 of the duct case 20 from the outside air inlet 27 flows from the duct cooling portion 720 to the space 43 through the cooling air inlet 63. Then, the outside air for cooling which has thus entered the space 43 flows out from the cooling air outlet 64 to the outside air discharge portion 730. That is, as indicated with arrows in Fig. 7, in the interior of the space 43 is formed a flow of air advancing toward the cooling air outlet 64 from the cooling air inlet 63.

According to the second embodiment, the space 43 is formed between the air intake manifold 40 and the head cover 60, and outside air for cooling flows through the space 43 from the cooling air inlet 63 to the cooling air outlet 64. Consequently, the air intake air flowing through the straight port portions 51 is heat-insulated from the head cover 60 by the outside air for cooling flowing through the space 43 and is cooled by the same outside air. As a result, a rise in temperature of the air intake air flowing through the straight port portions 51 is prevented. Consequently, the charging efficiency of air intake air introduced into the combustion chambers of the engine is improved and it is possible to improve the engine performance. It is also possible to cool the head cover 60.

Forming the space 43 allows the cylinder head (not shown) to be doubly covered with the head cover 60 and the air intake manifold 40. Consequently, noises of cams and valves disposed in the cylinder head and combustion noise in the engine combustion chambers are shut off by the head cover 60 and the air intake manifold 40. As a result, the noise insulating performance is improved, leading to diminished leakage of noise from the engine. Moreover, forming both air intake manifold 40 and the head cover 60 in one piece with each other allows the rigidity of the head cover 60 to improve. This enables the leakage of noise from the engine to be diminished.

The straight port portions 51 are each disposed between adjacent ignition coils 70 which are installed correspondingly to the combustion chambers of the engine. Therefore, the air intake pipes 50 are formed rectilinearly and a pressure loss of air intake air flowing through the straight port portions 51 is decreased. This improves the engine performance. Besides, each of the straight port portions 51 is disposed between adjacent ignition coils 70. This construction enables the air intake pipes 50 in the air intake manifold 40 to be extended easily according to engine characteristics. This construction also enables the ignition coils 70 to be installed through both air intake manifold 40 and head cover 60. Thus, it is possible to effect mounting or replacement of the ignition coils 70 easily.

The head cover 60 is accommodated in the space 43 formed in the air intake manifold 40, thus saving the space for both air intake manifold 40 and head cover 60 which are integral with each other. Consequently, when the air intake module 1 is installed in the vehicular engine compartment, an overall length of the air intake module in the vertical direction is reduced. As a result, it is possible to ensure a space between the air intake module 1 and the vehicular bonnet. That permits of absorbing the resulting shock against the pedestrian and hence of protecting the pedestrian in the event of collision of the vehicle with a pedestrian.

The air intake manifold 40 and the head cover 60 are formed in one piece with each other. This construction enhances the strength of the air intake manifold 40 and that of the head cover 60. Therefore, devices which constitute the air intake module 1, including the throttle device 30, are supported by the united air intake manifold 40 and head cover 60. This construction, different from the case where the devices which constitute the air intake module 1 are supported by, for example, the vehicular chassis, may eliminate the use of any special supporting member. Consequently, it is possible to reduce the number of parts and facilitate the mounting of the air intake module.

### (Third Embodiment)

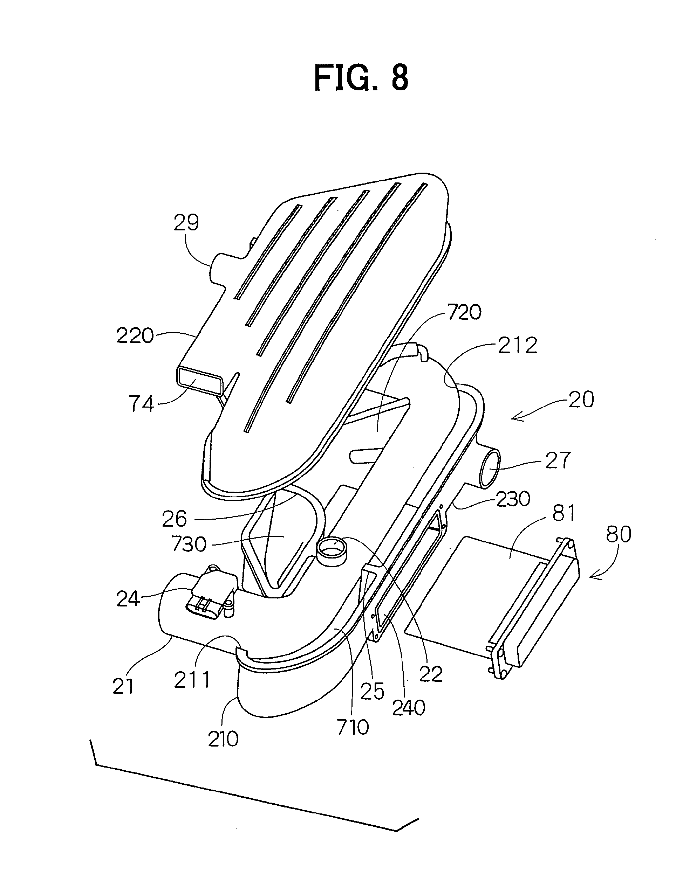

An air intake module 1 according to the third embodiment is illustrated in Figs. 8 to 10.

In this embodiment, as shown in Fig. 8, the duct case 20 is formed of resin and has vertically divided case body 210 and the case cover 220. The ECU 80 has the circuit board 81, on which are installed plural semiconductor devices, including CPU and ROM. The CPU mounted on the circuit board 81 generates heat upon execution of arithmetic operations. The ECU 80 is received in an ECU receptacle portion 240 as a control unit receptacle portion formed at a bottom 230 of the case body 210.

The air intake duct 21 is received in a space formed by both case body 210 and case cover 220. The air intake duct 21 is fitted in mounting portions 211 and 212 which are formed in the case body 210. After the air intake duct 21 is fitted in the mounting portions 211 and 212 of the case body 20, the case cover 220 is applied and the case body 210 and the case cover 220 are bonded together, for example, by fusion-bonding under vibration. As a result, the duct case 20 and the air intake duct 21 are assembled together. Then, the air intake duct 21 is mounted to the air cleaner 10 and the throttle device 30, whereby the duct case 20 and the air intake duct 21 as an integral unit constitute the integral air intake module 1 conjointly with the air cleaner 10, air intake manifold 40 and head cover 60.

The ECU receptacle portion 240, which is formed in the case body 210 on the side opposite to the case cover 20, is integral with the bottom 230 of the case body 210 and is open sideways of the case body 210. The ECU 80 is inserted into the ECU receptacle portion 240 which is thus open sideways of the case body 210. The ECU 80 is fixed to the case body 210 through a screw or the like (not shown).

The space formed by the case body 210 and the case cover 220 is divided by partition walls 25 and 26. The space formed by the case body 210 and the case cover 220 is divided into the resonator volume portion 710, the duct cooling portion 720, and the cooling air discharge portion 730 by means of the partition walls 25 and 26.

The resonator volume portion 710 is formed on the air cleaner 10 side with respect to the partition wall 25. The resonator volume portion 710 forms a resonator conjointly with the aperture 22 formed in the air intake duct 21. The resonator expands a sectional area of an air intake passage formed by the air intake duct 21 and diminishes an air intake noise which is generated as cavity noise by resonance of the air intake passage.

A outside air inlet 27 is formed in the case body 210, and the duct cooling portion 720 is in communication with the outside air inlet 27. The duct cooling portion 720 is adjacent to the resonator volume portion 710 with the partition wall 25 therebetween. The outside air inlet 27 is open to the engine compartment of a vehicle on which the engine is mounted, and introduces outside air into the duct case 20 separately from the intake air flowing through the air intake duct 21.

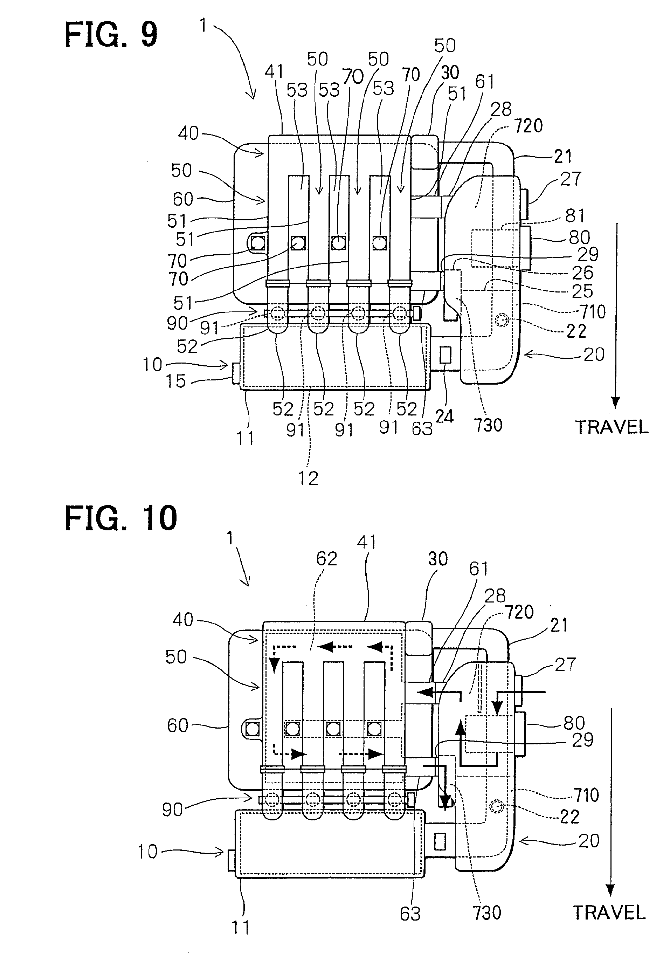

As indicated with arrows in Fig. 10, outside air for cooling introduced into the duct cooling portion 720 from the outside air inlet 27 flows around the air intake duct 21 and is discharged from a cooling air outlet 28 formed in the case body 210. The passage formed around the air intake duct 21 and reaching the cooling air outlet 28 via the duct cooling portion 720 from the outside air inlet 27 constitutes a cooling air passage. The cooling air outlet 28 is in communication with a connection passage 61 with a head cover cooling passage 62 which is formed between the head cover 60 and the air intake manifold 40. Consequently, the outside air for cooling discharged from the cooling air outlet 28 flows into the head cover cooling passage 62.

The head cover cooling passage 62 is formed between the head cover 60 and the air intake manifold 40. The head cover 60 and the air intake manifold 60 are bonded together at their outer edge portions, for example, by fusion-bonding under vibration. A predetermined distance is ensured between the head cover 60 and the air intake manifold 40 to form a space serving as the head cover cooling passage 62. The head cover cooling passage 62 is in communication with the cooling air outlet 28 through the connection passage 61 and is also in communication through a connection passage 63 with the cooling air discharge portion 730 formed in the duct cover 21.

The cooling air discharge portion 730 has a cooling air outlet 74 formed in the case cover 220. Outside air for cooling which has entered the cooling air discharge portion 730 from the head cover cooling passage 62 through the connection passage 63 and further through an inlet port 29 formed in the case cover 220 is discharged from the cooling air outlet 74. The cooling air outlet 74 is in communication with a radiator and a radiator fan for cooling the radiator (neither shown). With operation of the radiator fan, the pressure of the space between the radiator and the radiator fan becomes lower than the ambient pressure, with the result that a suction pressure is created at a radiator-side end portion of the cooling air outlet 74, whereby a pressure difference is created between the outside air inlet 27 and the cooling air outlet 74. As a result, the outside air for cooling flows from the outside air inlet 27 to the duct cooling portion 720 of the duct case 20, passes through the cooling passage formed in the duct case 20, then through the head cover cooling passage 62 formed between the head cover 60 and the air intake manifold 40, and further through the cooling air discharge portion 730, and is discharged from the cooling air outlet 74.

The outside air for cooling which has flowed from the outside air inlet 27 into the cooling passage formed in the duct case 20 then flows around the air intake duct 21 and thereby cools the air intake duct, so that the temperature of intake air flowing through the air intake passage formed by the air intake duct 21 becomes lower. Further, since the ECU receptacle portion 240 is integral with the bottom 230 of the case body 210, the ECU receptacle portion 240 and the duct cooling portion 720 are disposed adjacent each other with the bottom 230 of the case body 210 there between. With this arrangement, the ECU 80 accommodated within the ECU receptacle portion 240 is cooled by the outside air for cooling flowing through the cooling passage formed in the duct case 20. Thus, the outside air for cooling flowing through the cooling passage in the duct case 20 cools not only the air intake duct 21 but also the ECU 80.

In this embodiment, the air intake duct 21 is constituted integrally with the duct case 20 which has the resonator volume portion 710, duct cooling portion 720 and ECU receptacle portion 240. The cooling passage for the flow of outside air for cooling is also integrally formed in the duct case 20. Consequently, it is possible to reduce the number of parts and simplify the mounting of the air intake module to the engine.

The air intake module 1 is constructed such that formed in the duct case 20 is not only the air intake duct 21 but also the cooling passage for the flow of outside air for cooling the ECU 80. This construction allows the air intake duct 21 to be cooled and also allows the temperature of intake air flowing through the air intake duct 21 to be reduced. Consequently, the charging efficiency of intake air introduced into the combustion chambers of the engine is enhanced.

Besides, since the ECU 80 is cooled by the outside air for cooling flowing through the cooling passage, the temperature of the intake air flowing through the air intake duct 21 does not rise. Accordingly, it is possible to not only improve the reliability of the semiconductor device which constitutes the ECU 80 but also improve the engine performance. Additionally, since the cooling passage is formed in the interior of the duct case 20, the number of parts is not increased and it is possible to facilitate mounting of the air intake module.

The air intake module 1 is constructed such that a resonator is formed in the duct case 20. This construction diminish the air intake noise. Besides, since the duct case 20 covers the outer periphery side of the air intake duct 21, the noise generated from the intake air flowing through the air intake passage formed by the air intake duct 21 is shut off by both air intake duct 21 and duct case 20. Consequently, it is possible to diminish noise which leaks out from the air intake duct 21.

Further, the outside air for cooling discharged from the duct cooling portion 720 flows into the head cover cooling passage 62 which is formed between the air intake manifold 40 and the head cover 60. The space between the head cover 60 and the air intake manifold 40 is heat-insulated by the outside air for cooling flowing through the head cover cooling passage 62. Likewise, the intake air flowing through the air intake manifold 40 is cooled by the cooling outside air flowing through the head cover cooling passage 62. Consequently, it is possible to prevent a rise in temperature of the intake air flowing through the air intake manifold 40 caused by the heat from the engine.

The present invention should not be limited to the disclosed embodiments, but may be implemented in many other ways without departing from the spirit of the invention.

## Claims

1. An air intake module (1) for an internal combustion engine, comprising:
a head cover (60) mounted on a cylinder head of an internal combustion engine having a plurality of combustion chambers;
an air intake manifold (40) having an air connector (41) and air intake pipes (50), the air intake pipes being branched from the air connector according to the number of the combustion chambers, the air intake pipes including rectilinear, straight port portions (51) formed on a side of the head cover opposite to the cylinder head and curved port portions (52) which connect ends of the straight port portions on the side opposite to the air connector with the combustion chambers; and
ignition coils (70) each positioned between the adjacent straight port portions and having one ends projecting through the air intake manifold and the head cover to the cylinder head side.

2. The air intake module (1) according to claim 1 further comprising:
a throttle device (30) provided on a side of the air connector opposite to the straight port portions, the throttle device being supported integrally with the air intake manifold.

3. The air intake module according to claim 1 or claim 2, wherein
the head cover (60) and the air intake manifold (40) are integrally formed of resin.

4. The air intake module according to claim 3, wherein the head cover (60) and the air intake manifold (40) are bonded together at their peripheral edge portions and forms a space there between to permit flowing of air.

5. An air intake module (1) for an internal combustion engine, comprising:
an air intake duct (21) defining an air intake passage for the flow of intake air which has passed through an air cleaner (10);
an electronic control unit (80) for controlling operation of the engine; and
a duct case (20) having a control unit receptacle portion (240) for receiving the electronic control unit therein and also having a resonator volume portion (710) which forms a resonator for, together with the air intake duct, diminishing an air intake noise in the air intake passage, the duct case covering the outside of the air intake duct.

6. The air intake module (1) according to claim 5, wherein the duct case (20) further has a cooling passage for the flow of outside air (72) through the interior thereof, the cooling passage being formed in the vicinity of both the control unit receptacle portion and the air intake duct.

7. An air intake module according to claim 6, further comprising:
a head cover (60) mounted on the engine and an air intake manifold (40) installed on a side of the head cover opposite to the engine, wherein the cooling passage (72) is formed between the head cover and the air intake manifold and is in communication with a head cover cooling passage (62) through which air flows so as to cool the head cover.
